(19) Europäisches Patentamt

European Patent Office

Office européen des brevets

(11) Veröffentlichungsnummer: **0 321 673 B1**

(12) **EUROPÄISCHE PATENTSCHRIFT**

(45) Veröffentlichungstag der Patentschrift: **27.05.92**

(21) Anmeldenummer: **88117555.8**

(22) Anmeldetag: **21.10.88**

(51) Int. Cl.⁵: **B23B 51/00**, E21B 44/00, E21B 10/58

㉒ **Bohrer.**

(30) Priorität: **21.12.87 DE 3743364**

(43) Veröffentlichungstag der Anmeldung:
**28.06.89 Patentblatt 89/26**

(45) Bekanntmachung des Hinweises auf die
Patenterteilung:
**27.05.92 Patentblatt 92/22**

(84) Benannte Vertragsstaaten:
**AT BE CH ES FR GB IT LI NL SE**

(56) Entgegenhaltungen:
**EP-A- 0 175 011**
**DE-C- 578 132**
**DE-C- 910 376**

(73) Patentinhaber: **fischerwerke Artur Fischer
GmbH & Co. KG
Weinhalde 14 - 18
W-7244 Waldachtal 3/Tumlingen(DE)**

(72) Erfinder: **Fischer, Arthur, Prof. Dr. h. c.
Weinhalde 34
W-7244 Waldachtal 3/Tumlingen(DE)**

(74) Vertreter: **Ott, Elmar, Dipl.-Ing.
fischerwerke Artur Fischer GmbH & Co KG
Weinhalde 14-18
W-7244 Waldachtal 3/Tumlingen(DE)**

**Beschreibung**

Die Erfindung betrifft einen Bohrer gemäß den Ansprüchen 1 und 2.

Aus der DE-GBM 86 06 414 ist eine Bohreinheit zur Herstellung einer Hinterschneidung im Bohrloch bekannt, die einen Bohrer verwendet, dessen Schneiden von am Bohrkopf eingesetzten Bohrplatten gebildet werden. Die Seitenschneiden der Bohrplatten stehen deutlich über den Bohrschaft über, so daß durch eine Dreh- und Schwenkbewegung des Bohrers die Hinterschneidung am Bohrlochgrund eingebracht werden kann. Ein derart hinterschnittenes Bohrloch ermöglicht eine nahezu spreizdruckfreie und formschlüssige Verankerung eines entsprechend ausgebildeten Spreizdübels. Das Spreizelement des Spreizdübels läßt sich im Bereich der Hinterschneidung aufweiten, wodurch die formschlüssige Verbindung zwischen Spreizdübel und Mauerwerk entsteht.

Die zur Herstellung hinterschnittener Bohrlöcher verwendeten herkömmlichen Bohrer haben den Nachteil, daß beim Einbringen der Bohrung in das Mauerwerk der Bohrer seitlich ausweicht, so daß das Bohrloch nicht völlig gerade verläuft. Dieses unerwünschte Ausweichen des Bohrkopfes wird durch die überstehenden Bohrplatten begünstigt, die jedoch für die Anbringung der Hinterschneidung erforderlich sind.

Für die Herstellung von Bohrlöchern ohne Hinterschneidung ist aus der EP-A-0 175 011 ein Bohrwerkzeug mit einem Bohrkopf bekannt, der einen größeren Durchmesser als der Bohrschaft und aus Hartmetall bestehende Bohrplatten mit gleichmäßig überstehenden Stirn- und Seitenschneiden aufweist. Allerdings verlaufen die Stirn- und Seiten-schneiden nur über eine Teillänge der Stirn- und Seitenfläche des Bohrkopfes, so daß dieses Bohrwerkzeug nur zum Ausdrehen einer bereits vorhandenen Bohrung verwendbar ist. Ferner wird der Bohrkopfdurch zwei gegeneinander versetzt angeordnete Kopfplatten gebildet, die nur im Bereich der Schneidplatten den Bohrschaft überragen. Zur Aufnahme des beim Bohren entstehenden Zerspanungsdruckes sind die Kopfplatten in einer Verzahnung geführt und mit Befestigungsschrauben auf der Stirnseite des Bohrschaftes befestigt. Das bekannte Bohrwerkzeug ist daher aufgrund seiner Konstruktion weder zur Herstellung von zylindrischen, noch von hinterschnittenen Bohrlöchern in Bauteilen geeignet.

Der Erfindung liegt die Aufgabe zugrunde, einen Bohrer zur Herstellung von hinterschnittenen Bohrlöchern in Bauteilen zu schaffen, der beim Einbringen des Bohrlochs gute Zentriereigenschaften und Stabilität aufweist.

Die Lösung dieser Aufgabe wird durch die in den Ansprüchen 1 und 2 angegebenen Merkmale erreicht.

Der mit dem Bohrschaft verbundene Bohrkopf bildet mit seiner zylindrischen, gegenüber dem Bohrschaft erweiterten Umfangsfläche und deren konischen Übergang zum Bohrschaft eine das Ausbrechen der Schneiden verhindernde Abstützung der Bohrplatten. Ferner wird durch den erweiterten Bohrkopf eine gute Zentrierwirkung erreicht, die einem Verlaufen des Bohrer vorbeugt.

Die Abstützung der Bohrplatten und die verbesserte Führung des Bohrers kann in gleicher Weise dadurch erreicht werden, daß die Bohrplatten an einem durch eine Auflauffläche gebildeten radialen Vorsprung anliegen. Als besonders vorteilhaft hat sich erwiesen, wenn der Radius der Auflauffläche zwischen zwei Bohrplatten von der Vorderseite der einen Bohrplatte bis zur Rückseite der anderen Bohrplatte so zunimmt, daß die Rückseite der Bohrplatte vollständig vom Bohrkopfkörper abgedeckt ist.

Bei beiden Lösungen stehen die Schabkanten der Seitenschneiden mit möglichst gleichem Abstand vom Bohrkopf ab. Der Abstand kann beispielsweise bei einem Bohrkopfdurchmesser von 16 mm 1 bis 2 mm betragen. Das Verhältnis der Längen zwischen zylindrischer Umfangsfläche des Bohrkopfes und dem zum Bohrschaft übergehenden Konus bestimmt die Geometrie der auszureibenden Hinterschneidung. Bereits durch eine sich über eine Länge von wenigen Millimetern erstreckenden zylindrischen Umfangsfläche wird eine sehr gute Zentrierwirkung beim Bohrvorgang erzielt.

Der Bohrschaft kann je nach Anwendungsbereich als Glattschaft oder als Schaft mit gewendelten Bohrmehlnuten ausgebildet sein, die während des Bohrvorganges das im Bohrloch anfallende Bohrmehl nach außen transportieren. In Verbindung mit Absaugvorrichtungen kann jedoch auch ein einfach herstellbarer Glattschaft Verwendung finden.

Die Erfindung wird nachfolgend anhand der Zeichnung näher erläutert.

Es zeigen:

Figur 1     den Bohrer in Seitenansicht,
Figur 2     den in Figur 1 dargestellten Bohrer in Grundansicht und
Figur 3     die Frontansicht eines Bohrers mit Auflaufflächen im Bereich des Bohrkopfes.

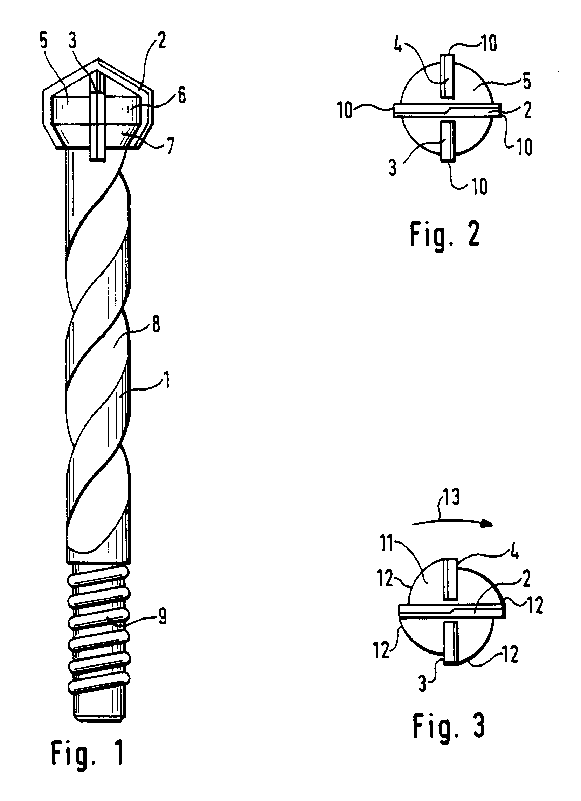

Der in Figur 1 dargestellte Bohrer besteht aus einem Bohrschaft 1 und aus einer Bohrplatte 2 und zwei um 90 Grad zu der Bohrplatte 2 versetzte Bohrplatten 3,4. Die Bohrplatten 2 - 4 sind in entsprechende Schlitze im Bohrkopf 5 eingesetzt, dessen Durchmesser deutlich größer ist als der Durchmesser des Schaftes 1.

Der Bohrkopf 5 besitzt eine zylindrische Mantelfläche, die über einen Konus 7 in den geraden Schaft 1 übergeht. Der Schaft 1 besitzt wendelförmige Bohrmehlnuten 8, mit denen das während des Bohrvorganges anfallende Bohrmehl aus der Bohrung nach außen transportiert wird.

Der Bohrer besitzt ein Rundgewinde 9 mit dem er sich in einer entsprechend ausgebildeten Bohrvorrichtung einsetzen läßt.

In Figur 2 ist der kreisförmige Querschnitt des Bohrkopfes 5 ersichtlich, dessen Umfangsfläche nur geringfügig gegenüber den Seitenschneiden 10 zurückgesetzt ist. Die Bohrplatten 10 sind vorzugsweise aus Hartmetall gefertigt.

In Figur 3 ist eine andere Querschnittsform eines Bohrkopfes dargestellt. Hier sind die Bohrplatten 2 - 4 an ihrer Rückseite vollständig vom Bohrkopfkörper 11 überdeckt, an den Auflaufflächen 12 ausgebildet sind. Der radiale Abstand der Auflaufflächen 12 nimmt ausgehend von der Vorderseite einer Bohrplatte, beispielsweise der Bohrplatte 4, bis zur Rückseite der nächsten Bohrplatte 2 stetig zu, wodurch die Bohrplatten rückseitig vollständig abgestützt sind und ihre Vorderseite im Bereich der Schneide freibleibt. Die Drehrichtung des Bohrkopfes ist durch den Pfeil 13 angegeben.

## Patentansprüche

1. Bohrer zur Herstellung von Bohrlöchern mit Hinterschneidung, mit einem einen größeren Durchmesser als der Bohrschaft aufweisenden Bohrkopf, der mit aus Hartmetall bestehenden Bohrplatten mit gleichmäßig überstehenden Stirn und Seitenschneiden versehen ist, wobei der Bohrkopf (5) mit dem Bohrschaft (1) verbunden ist und eine zylindrische Umfangsfläche (6) aufweist, die über einen Konus (7) zum Bohrschaft (1) übergeht.

2. Bohrer zur Herstellung von Bohrlöchern mit Hinterschneidung, mit einem einen größeren Durchmesser als der Bohrschaft aufweisenden Bohrkopf, der mit aus Hartmetall bestehenden Bohrplatten mit gleichmäßig überstehenden Stirn- und Seitenschneiden versehen ist, wobei die Seitenschneiden bildenden Bohrplatten (2 - 4) mit ihrer Vorderseite am Bohrkopf (11) radial überstehen und mit ihrer Rückseite an einem durch eine Auflauffläche (12) gebildeten radialen Vorsprung anliegen.

3. Bohrer nach Anspruch 1 oder 2, **dadurch gekennzeichnet,** daß die Seitenschneiden (10) von zwei oder mehreren in den Bohrkopf (5) eingesetzten Bohrplatten (2 - 4) gebildet sind.

4. Bohrer nach Anspruch 2, **dadurch gekennzeichnet,** daß der Radius der Auflauffläche (12) zwischen zwei Bohrplatten von der Vorderseite der einen Bohrplatte (4) bis zur Rückseite der anderen Bohrplatte (2) so zunimmt, daß die Rückseite der Bohrplatte (2) vollständig vom Bohrkopfkörper (11) abgedeckt ist.

5. Bohrer nach einem der vorhergehenden Ansprüche, **dadurch gekennzeichnet,** daß der Bohrschaft (1) mit Bohrmehlnuten (8) ausgebildet ist.

## Claims

1. Drill for producing drilled holes having an undercut, having a drill head that has a larger diameter than the drill shaft and is provided with drill plates made of hard metal and having uniformly projecting end cutting edges and lateral cutting edges, the drill head (5) being connected to the drill shaft (1) and having a cylindrical peripheral surface (6) which merges with the drill shaft (1) <u>via</u> a cone (7).

2. Drill for producing drilled holes having an undercut, having a drill head that has a larger diameter than the drill shaft and is provided with drill plates made of hard metal and having uniformly projecting end cutting edges and lateral cutting edges, the front faces of the drill plates (2 - 4) forming the lateral cutting edges projecting radially from the drill head (11) and the back faces of the drill plates resting against a radial projection formed by a run-up surface (12).

3. Drill according to claim 1 or claim 2, characterised in that the lateral cutting edges (10) are formed by two or more drill plates (2 - 4) inserted into the drill head (5).

4. Drill according to claim 2, characterised in that the radius of the run-up surface (12) between two drill plates increases from the front face of one drill plate (4) to the back face of the other drill plate (2) in such a manner that the back face of the drill plate (2) is completely covered by the body (11) of the drill head.

5. Drill according to any one of the preceding claims, characterised in that the drill shaft (1) is provided with helical flutes (8) for drill dust.

## Revendications

1. Foret pour exécution de trous borgnes à chambrage, ce foret comportant une tête dont le diamètre est plus grand que celui de la queue et qui est munie de plaquettes de coupe en métal dur, dont les arêtes frontales et latérales font saillie uniformément, cette tête (5) étant reliée à cette queue (1) et présentant une surface périphérique (6) cylindrique, qui se raccorde à la queue (1) par un cône (7).

2. Foret pour exécution de trous borgnes à chambrage, ce foret comportant une tête dont le diamètre est plus grand que celui de la queue et qui est munie de plaquettes de coupe en métal dur dont les arêtes frontales et latérale font saillie uniformément, la face antérieure des plaquettes (2 à 4), qui forment les arêtes latérales, faisant saillie radialement de la tête (11) et leur dos étant appliqué contre un épaulement radial formé par une surface (12) en forme de rampe.

3. Foret selon la revendication 1 ou 2, caractérisé en ce que les lames (10) latérales sont formées par deux plaquettes (2 à 4) ou plus, montées dans la tête (5).

4. Foret selon la revendication 2, caractérisé en ce que le rayon de la surface (12) en forme de rampe augmente entre deux plaquettes, de la face antérieure de l'une (4) de ces plaquettes jusqu'au dos de l'autre plaquette (2), de façon que ce dos de l'autre plaquette (2) soit complètement recouvert par le corps (11) de la tête.

5. Foret selon l'une des revendications précédentes, caractérisé en ce que sa queue (1) comporte des gorges (8) destinées à évacuer la poussière de perçage.

Fig. 1

Fig. 2

Fig. 3